# FASCICULE DE BREVET EUROPEEN

(11) **EP 1 785 588 B1**
(45) Date de publication et mention de la délivrance du brevet: **13.04.2016**
(21) Numéro de dépôt: 06122697.3
(22) Date de dépôt: 20.10.2006
(51) Int. Cl.: F01D 5/08, F02C 7/12

(54) **Dispositif de ventilation de disque de turbine dans un moteur à turbine à gaz**
Belüftungseinrichtung für eine Turbinenrotorscheibe in einer Gasturbine
Ventilation device for a turbine disk in a gas turbine engine

(30) Priorité: 21.10.2005 FR 0553216
(43) Date de publication de la demande: 16.05.2007
(73) Titulaire: SNECMA, 75015 Paris (FR)
(72) Inventeur: CHARIER, Gilles, 77130, LA GRANDE PAROISSE (FR); ROUSSELIN, Stéphane, 77850, HERICY (FR); BOUILLER, Philippe, 77210, SAMOREAU (FR)
(74) Mandataire: Gevers & Orès

(56) Documents cités:
- EP-A- 0 469 784
- US-A- 5 226 785
- US-A- 5 586 860
- US-A- 5 984 636
- PATENT ABSTRACTS OF JAPAN vol. 2003, no. 12, 5 décembre 2003 (2003-12-05) -& JP 2005 042669 A (HITACHI LTD), 17 février 2005 (2005-02-17)

## Description

La présente invention concerne le domaine des moteurs à turbine à gaz et vise la circulation de l'air destiné à la ventilation et au refroidissement d'éléments situés en aval de la chambre de combustion, notamment les disques de turbine.

Dans un moteur à turbine à gaz, il est nécessaire de faire circuler de l'air le long d'éléments soumis aux contraintes thermiques des gaz chauds en aval de la chambre de combustion pour en contrôler la température. Dans un moteur à double corps, on distingue le circuit d'air destiné à la ventilation de la section haute pression de celui destiné à ventiler la section basse pression située en aval, car les matériaux et les contraintes thermiques sont différents.

La présente invention concerne ce deuxième circuit d'air.

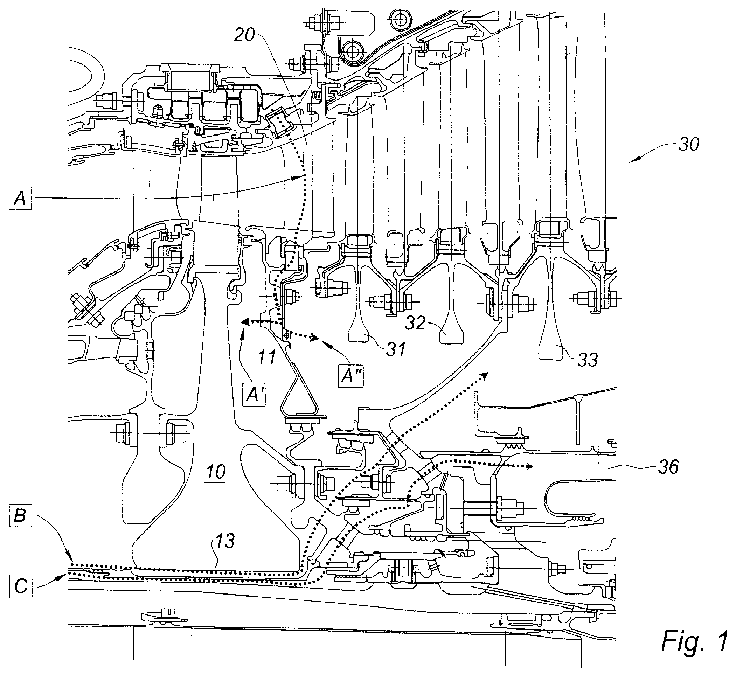

Dans un moteur à double corps actuel de type civil, tel que le moteur CFM, comprenant un corps haute pression HP avec un étage de turbine HP 1 et un corps basse pression BP avec une turbine BP 30 à trois étages 31, 32 et 33, les différents circuits assurant la ventilation en aval de la turbine haute pression sont représentés sur la figure 1 ; on y distingue :
Un flux d'air A, prélevé au milieu du compresseur HP, acheminé au travers des pales du distributeur 20 du premier étage BP et assurant en A' la purge de la cavité aval 11 de la turbine HP 10.
Une fraction A" de ce même flux assurant la ventilation des alésages des deux premiers disques des étages 31 et 32 de la turbine basse pression 30.
Un flux d'air B prélevé en amont du compresseur HP, acheminé à travers l'alésage 13 de la turbine HP 10 et assurant la ventilation de l'alésage du troisième étage 33 de la turbine BP 30.
Un flux d'air C prélevé au niveau du compresseur BP, acheminé à travers l'alésage 13 de la turbine HP 10, et assurant la pressurisation des capotages 36 des enceintes abritant les roulements.

Les compresseurs pour ce type de moteur sont axiaux et présentent des espaces suffisants pour le guidage des différents flux d'air de ventilation depuis la zone de prélèvement jusqu'à leur application.

Certains moteurs moins puissants et plus compacts ont un corps HP avec compresseur radial, plus court, et leur taux de compression est plus faible. Cette disposition présente des problèmes lorsqu'il s'agit d'assurer la fonction de ventilation rapportée ci-dessus.

La pression ne suffit pas toujours à ventiler convenablement l'alésage des disques de turbine BP, et cette situation n'est pas favorisée par la faible section de passage entre l'alésage de la turbine HP et l'arbre BP.

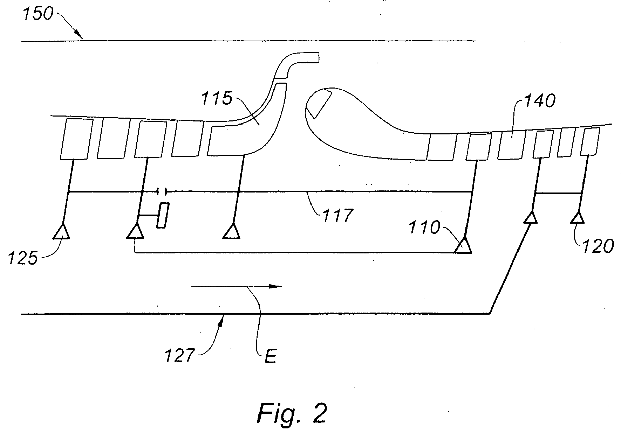

La roue centrifuge du compresseur radial a un diamètre de sortie relativement important. Il s'ensuit un passage réduit pour l'air acheminé vers le distributeur du premier étage de la turbine BP. Par ailleurs, comme on le voit sur la figure 2, le prélèvement au milieu du compresseur HP est souvent réalisé au moyen de tubes de prélèvement centripètes qui induisent une perte charge importante pour l'air de ventilation.

L'invention a pour objectif de remédier aux problèmes ci-dessus, en fournissant un moyen qui permet de ventiler correctement les disques de turbine BP, plus particulièrement dans les moteurs compacts présentant un compresseur centrifuge, et qui tient compte des contraintes d'encombrement propres à ce type de moteur.

L'invention parvient à réaliser cet objectif avec un moteur présentant les caractéristiques énoncées dans la revendication 1.

Grâce à l'invention, on utilise efficacement les circuits d'air à travers l'alésage de turbine, et il est aussi possible maintenant de simplifier la structure du distributeur de premier étage de la turbine basse pression car il n'est plus nécessaire d'en acheminer de l'air à travers les pales. Le document JP 2005042669 décrit un moyen de prélèvement d'air de refroidissement de la turbine basse pression agencé entre les secteurs de turbine haute et moyenne pression mais il ne prévoit de solidarisation à l'un des disques de turbine haute pression ou basse pression.

Lorsque le rouet de compression est solidaire du disque de turbine HP, avantageusement le rouet constitue alors un élément structurel du disque de turbine en formant le support de palier.

Conformément à une autre caractéristique, le rouet de compression comprend un disque pourvu d'ailettes radiales coopérant avec une cloison de stator pour comprimer l'air. Avantageusement, la cloison comporte des ailettes de guidage d'air.

Conformément à une autre caractéristique, la cloison de stator délimite avec le disque de turbine HP une cavité aval de turbine HP, et l'air provenant de l'alésage du disque de turbine HP alimente en partie le rouet et en partie la cavité.

Conformément à une autre caractéristique le moteur comprend un deuxième circuit de ventilation, ledit circuit ventilant les capots des enceintes à huile de palier distinct, notamment ledit deuxième circuit comprend une partie formant conduit de guidage coaxial à la partie de guidage du premier circuit.

L'invention porte également sur un moteur dont le rouet de compression d'air comprend un voile radial avec une première portion annulaire pourvue de perçages de fixation et une deuxième portion pourvue d'ailettes radiales. Selon un premier mode de réalisation, la première portion est radialement intérieure par rapport à la deuxième portion. Selon un deuxième mode de réalisation la première portion est radialement extérieure par rapport à la deuxième portion.

La description qui suit porte sur deux modes de réalisation non limitatifs de l'invention, en référence aux dessins annexés sur lesquels,
La figure 1 montre en demi coupe axiale la partie d'un moteur à turbine à gaz à double corps de l'état de la technique, comprenant une turbine HP et une turbine BP,
La figure 2 montre en demi coupe axiale un moteur avec un compresseur radial, de l'état de la technique,
La figure 3 montre en demi coupe axiale un disque de turbine équipé d'un rouet conformément à l'invention,
La figure 4 montre vu en perspective un rouet seul conforme à l'invention,
La figure 5 montre un deuxième mode de réalisation

En se reportant à la figure 2, on voit un moteur à turbine à gaz, dit de petite taille, à double corps le corps haute pression HP comprend une turbine 110 reliée à un compresseur HP 115 par un arbre 117. Le compresseur 115 est du type à rouet centrifuge. Le corps basse pression comprend une turbine basse pression 120 à plusieurs étages montée sur un arbre 127, coaxial avec l'arbre 117, en étant relié à un compresseur 125 basse pression, de type axial et comportant lui-même plusieurs étages. Une chambre de combustion 130 est disposée entre le compresseur et la turbine du corps HP. Un étage distributeur 140 sépare les deux turbines 110 et 120.

Comme on le voit, sur cette figure sans la mise en oeuvre de l'invention, un premier circuit d'air de ventilation E comprend une prise d'air en amont du compresseur HP et est dirigé axialement entre les deux arbres 117 et 127 à travers l'alésage du rotor de turbine 110 pour ventiler la cavité aval de turbine. Un deuxième circuit d'air est guidé entre l'enveloppe extérieure 150 du moteur et le carter du corps HP via des tubes non représentés. Il apparaît qu'un tel agencement n'est pas satisfaisant car la quantité d'air alimentant les circuits de ventilation n'est pas suffisante.
Pour le premier circuit, il y a trop peu de section de passage entre les arbres 117 et 127 pour l'air de ventilation.
Pour le second circuit, il y a peu de place pour installer des tubes de ventilation sur le carter.

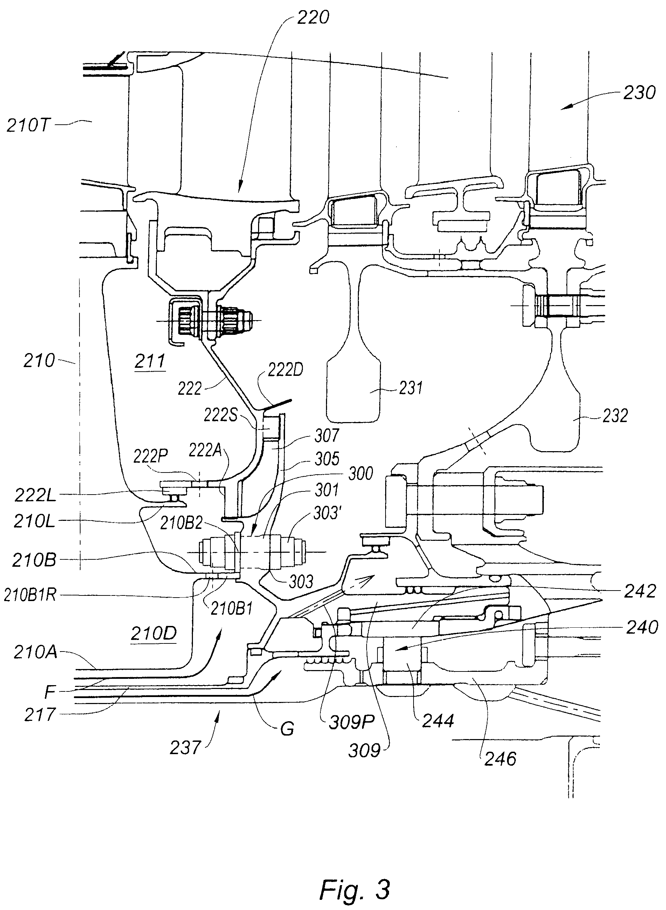

Conformément à l'invention, on a aménagé, en aval du disque de turbine HP, un rouet de compression de l'air destiné à la ventilation de la turbine BP. Sur la figure 3 on a représenté un tel dispositif.

On ne voit sur cette figure que le disque 210D de la turbine HP 210 avec un alésage central 210A. Le disque 210D est solidaire de l'arbre 217. A son extrémité amont, l'arbre 217 est solidaire du compresseur non visible sur la figure. Le disque supporte des ailettes de turbine HP 210T recevant les gaz chauds de la chambre de combustion non visible sur la figure.

Un étage statorique de distributeur 220 est placé en aval de la turbine HP 210 immédiatement en amont des ailettes de la turbine basse pression BP 230. Cette turbine est composée de plusieurs disques liés entre eux, dont on ne voit que les deux premiers 231 et 232. La turbine 230 est supportée par un arbre 237. Cet arbre 237 est concentrique à l'arbre 217. Un palier interarbre 240 aval maintient les deux arbres concentriques et leur permet de tourner librement l'un par rapport à l'autre. Le palier amont n'est pas visible sur la figure, tout comme le palier aval supportant l'arbre 237 dans la structure fixe. Un espace annulaire F est ainsi ménagé entre l'alésage 210A du disque de turbine et l'arbre 217. Un autre espace annulaire G est ménagé aussi entre les deux arbres 217 et 237.

Le disque 210D comporte une bride 210B sur laquelle est boulonné un rouet de compression 300. Le rouet comporte une partie globalement en forme de disque perpendiculaire à l'axe du moteur, avec une première portion 301 percée axialement d'une pluralité de trous 303 pour le passage des boulons 303' de fixation du rouet à la bride 210B. Radialement à l'extérieur de cette portion le disque comporte une portion annulaire 305 pourvue d'ailettes radiales 307. Cette deuxième portion coopère avec une paroi fixe 222 pour former un moyen compresseur d'air centrifuge à entrée axiale et sortie radiale. La paroi 222 supporte des ailettes 222A de guidage axial en entrée et des ailettes 222S de guidage radial en sortie du compresseur. Un déflecteur 222D annulaire permet d'orienter le flux d'air sortant du compresseur vers la base des disques de turbine 231 et 232. La paroi 222 ménage avec le disque de turbine 210D un espace 211 formant ladite cavité aval de turbine HP un moyen d'étanchéité à labyrinthe 222L coopère avec un moyen correspondant 210L sur le disque pour contenir l'air dans cette cavité 211. On note que le rouet comprend une portion cylindrique 309 formant support de la bague extérieure 242 du palier 240. Les éléments de roulement 244 sont ainsi logés entre la bague intérieure 246 solidaire de l'arbre 237 et la bague extérieure 242 solidaire de l'arbre 217 et forment le palier interarbre 240.

La bride 210B est en équerre avec une partie cylindrique axiale 210B1 et une partie perpendiculaire 210B2 comprenant les perçages, coopérant avec les perçages 303 pour le passage des boulons 303'. La partie cylindrique 210B1 est percée de trous radiaux 210B1r. Un espace annulaire est ménagé entre la bride 210B, le rouet 300 et la paroi 222. Des perçages radiaux 222P sont pratiqués dans la paroi 222 entre les ailettes 222A et l'étanchéité 222L.

Des perçages 309P sont pratiqués dans la portion cylindrique 309 du rouet pour mettre en communication l'espace G avec la partie aval du rotor basse pression 230.

Le dispositif de l'invention fonctionne de la façon suivante.
Lorsque le moteur est en fonctionnement, les deux rotors HP et BP respectivement sont entraînés par les gaz issus de la chambre de combustion. Ils tournent chacun indépendamment l'un de l'autre. L'air de ventilation prélevé au niveau des derniers étages du compresseur amont selon un premier circuit est guidé dans l'espace F, et traverse la bride 210B par les perçages 210B1r. Une partie est aspirée par le rouet 300, l'autre partie est guidée à travers les perçages 222P dans la cavité 211 aval de turbine HP qu'elle ventile. L'air comprimé dans les canaux de compression du rouet 300 est évacué en direction des disques de turbine 231 et 232 dont elle assure la ventilation, et est évacuée dans la veine de gaz de combustion ou bien par des orifices appropriés à travers le support de turbine BP 230.

L'air de ventilation, prélevé au niveau des premiers étages du compresseur HP, qui circule dans l'espace annulaire G, entre les deux arbres 217 et 237, est guidé à travers les perçages 309P vers l'aval de la turbine BP, notamment vers les capotages des enceintes d'huile de palier.

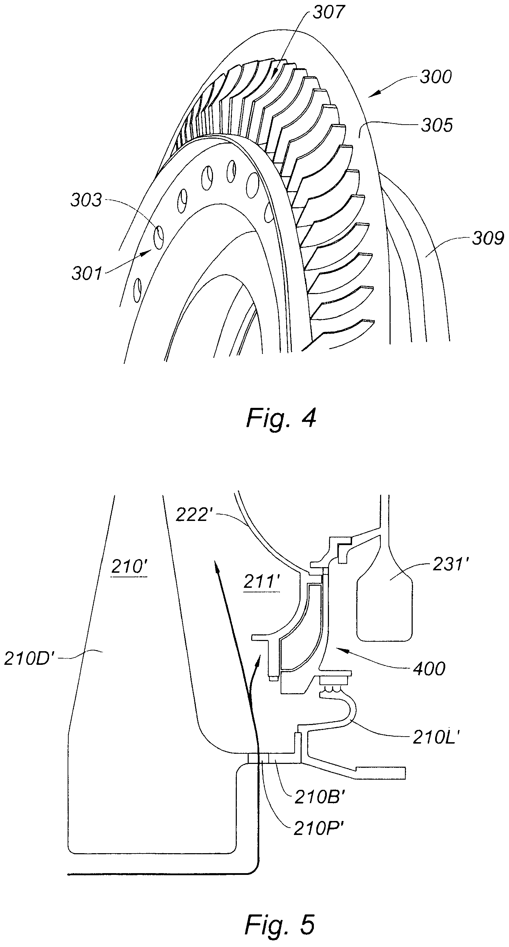

Conformément à un autre mode de réalisation, représenté sur la figure 5, on retrouve le disque de turbine HP 210' avec une bride 210B' aval, de fixation d'un élément d'étanchéité à labyrinthe 210L'. Le rouet 400 est ici solidaire du disque de turbine BP 231' par lequel il est entraîné. Le rouet 400 comme dans la solution précédente coopère avec l'élément de stator 222' pour former des canaux de compression de l'air qui est guidé à travers l'alésage central du disque 210D', les perçages 210P' pratiqués dans la bride 210B' et provenant du compresseur amont. Le flux d'air se divise en une partie qui purge la cavité aval 211' du disque de turbine 210' et une partie qui est entraînée dans les canaux de compression du rouet 400. Le rouet 400 comprend des ouvertures pour ventiler les disques de turbine 231' et 233'.

## Revendications

1. Moteur à turbine à gaz comprenant deux rotors de turbine indépendants mécaniquement l'un par rapport à l'autre, chacun avec au moins un disque de turbine, respectivement disque de turbine HP (210D, 210D') et disque de turbine BP (231, 232 ; 231'), et un dispositif de ventilation d'éléments de turbine avec un premier circuit (F) de ventilation de la turbine BP (230 ; 230'), **caractérisé par le fait qu'**il comprend un rouet de compression d'air (300 ; 400) disposé en aval du disque de turbine HP pour assister la circulation de l'air dans le dit premier circuit (F) le rouet de compression étant solidaire soit du disque de turbine HP (210D) soit du disque de turbine BP (210D').

2. Moteur selon la revendication 1 dont le rouet de compression est disposé entre lesdits deux disques de turbine HP et BP (210, 231 ; 210',231')

3. Moteur selon l'une des revendications 1 et 2, dont le rouet (300 ; 400) de compression communique en entrée d'air avec l'alésage (210A ; 210A') du disque de turbine HP (210D ; 210D').

4. Moteur selon la revendication précédente, dont l'alésage (210A ; 210A') est alimenté en air provenant du compresseur HP.

5. Moteur selon l'une des revendications précédentes, dont le rouet (300 ; 400) de compression comprend un disque (303 ; 303') pourvu d'ailettes radiales (307 ; 307') coopérant avec une cloison (22, 22') de stator pour comprimer l'air.

6. Moteur selon la revendication 5, dont la cloison comporte des ailettes de guidage d'air (222A, 222S ; 222A', 222S').

7. Moteur, selon la revendication 5 ou 6, dont la cloison (222 ; 222') de stator délimite avec le disque de turbine HP une cavité (211 ; 211') aval de turbine HP.

8. Moteur , selon la revendication 3 ou 4 combinée avec la revendication 6, dont l'air provenant de l'alésage alimente en partie le rouet et en partie la cavité.

9. Moteur, selon l'une des revendications 1 à 8 comprenant un deuxième circuit (G) de ventilation, des capots des enceintes à huile de palier distinct.

10. Moteur, selon la revendication 9 dont ledit deuxième circuit (G), comprend une partie de guidage coaxial à la partie de guidage du premier circuit (F).

11. Moteur selon l'une des revendications précédentes dont le rouet de compression d'air comprend un voile radial avec une première portion annulaire pourvue de perçages de fixation et une deuxième portion pourvue d'ailettes radiales.

12. Moteur, selon la revendication 11, dont la première portion du rouet est radialement intérieure par rapport à la deuxième portion.

13. Moteur, selon la revendication 11, dont la première portion du rouet est radialement extérieure par rapport à la deuxième portion.

## Patentansprüche

1. Gasturbinenmotor, umfassend zwei Turbinenrotoren, die mechanisch unabhängig voneinander sind, mit jeweils mindestens einer Turbinenscheibe, der Hochdruckturbinenscheibe (210D, 210D') beziehungsweise der Niederdruckturbinenscheibe (231, 232; 231'), und eine Belüftungsvorrichtung von Turbinenelementen mit einem ersten Kreislauf (F) zur Belüftung der Niederdruckturbine (230; 230'), **dadurch gekennzeichnet, dass** er ein Laufrad zur Luftkompression (300; 400) aufweist, das nachgelagert nach der Hochdruckturbinenescheibe angeordnet ist, um das Zirkulieren der Luft in dem ersten Kreislauf (F) zu unterstützen, wobei das Laufrad zur Kompression sowohl mit der Hochdruckturbinenescheibe (210D) als auch mit der Niederdruckturbinenscheibe (210D') fest verbunden ist.

2. Motor nach Anspruch 1, wobei das Laufrad zur Kompression zwischen den zwei Hochdruck- und Niederdruckturbinenscheiben (210, 231; 210', 231') angeordnet ist.

3. Motor nach einem der Ansprüche 1 und 2, wobei das Laufrad (300; 400) zur Kompression am Lufteinlass mit der Bohrung (210A; 210A') der Hochdruckturbinenscheibe (210D, 210D') in Verbindung steht.

4. Motor nach dem vorhergehenden Anspruch, wobei der Bohrung (210A; 210A') Luft zugeführt wird, die von dem Hochdruckkompressor kommt.

5. Motor nach einem der vorhergehenden Ansprüche, wobei das Laufrad (300; 400) zur Kompression eine Scheibe (303; 303') aufweist, die mit radialen Rippen (307; 307') ausgestattet sind, die mit einer Trennwand (22, 22') des Stators zusammenwirken, um die Luft zu komprimieren.

6. Motor nach Anspruch 5, wobei die Trennwand Luftleitrippen (222A, 222S; 222A', 222S') aufweist.

7. Motor nach Anspruch 5 oder 6, wobei die Trennwand (222; 222') des Stators mit der Hochdruckturbinenscheibe einen Hohlraum (211; 211') nachgelagert nach der Hochdruckturbine begrenzt.

8. Motor nach Anspruch 3 oder 4, kombiniert mit Anspruch 6, wobei die Luft, die von der Bohrung kommt, teilweise dem Laufrad und teilweise dem Hohlraum zugeführt wird.

9. Motor nach einem der Ansprüche 1 bis 8, umfassend einen separaten zweiten Kreislauf (G) zur Belüftung der Hauben der Öllagerkammern.

10. Motor nach Anspruch 9, wobei der zweite Kreislauf (G) einen Führungsteil aufweist, der koaxial zu dem Führungsteil des ersten Kreislaufs (F) ist.

11. Motor nach einem der vorhergehenden Ansprüche, wobei das Laufrad zur Luftkompression einen radialen Beschlag mit einem ersten kreisförmigen Abschnitt, der mit Befestigungslöchern ausgestattet ist, und mit einem zweiten Abschnitt, der mit radialen Rippen ausgestattet ist, aufweist.

12. Motor nach Anspruch 11, wobei der erste Abschnitt des Laufrads gegenüber dem zweiten Abschnitt radial innenliegend angeordnet ist.

13. Motor nach Anspruch 11, wobei der erste Abschnitt des Laufrads gegenüber dem zweiten Abschnitt radial außenliegend angeordnet ist.

## Claims

1. Gas turbine engine comprising two turbine rotors mechanically independent of one another, each one with at least one turbine disc, respectively HP turbine disc (210D, 210D') and LP turbine disc (231, 232; 231'), and a turbine element ventilation system with a first ventilation circuit (F) of the LP turbine (230; 230'), **characterised by** the fact that it comprises an air compression spinning wheel (300; 400) arranged downstream of the HP turbine disc in order to assist the circulation of the air in said first circuit (F) with the compression spinning wheel being integral either with the HP turbine disc (210D) or with the LP turbine disc (210D').

2. Engine according to claim 1 of which the compression spinning wheel is arranged between said two HP and LP turbine discs (210, 231; 210', 231')

3. Engine according to one of claims 1 and 2, of which the compression spinning wheel (300; 400) communicates as an air inlet with the bore (210A; 210A') of the HP turbine disc (210D; 210D').

4. Engine as claimed in the preceding claim, of which the bore (210A; 210A') is supplied with air coming from the HP compressor.

5. Engine according to one of the preceding claims, of which the compression spinning wheel (300; 400) comprises a disc (303; 303') provided with radial blades (307; 307') cooperating with a stator wall (22, 22') in order to compress the air.

6. Engine according to claim 5, of which the wall comprises blades for guiding air (222A, 222S; 222A', 222S').

7. Engine, according to claim 5 or 6, of which the stator wall (222; 222') delimits with the HP turbine disc a cavity (211; 211') downstream of the HP turbine.

8. Engine, according to claim 3 or 4 combined with claim 6, of which the air coming from the bore partially supplies the spinning wheel and partially the cavity.

9. Engine, according to one of claims 1 to 8 comprising a second ventilation circuit (G), for covers of oil enclosures with separate bearing.

10. Engine, according to claim 9 of which said second circuit (G), comprises a guiding portion coaxial to the guiding portion of the first circuit (F).

11. Engine according to one of the preceding claims of which the air compression spinning wheel comprises a radial runout with a first annular portion provided with fastening holes and a second portion provided with radial blades.

12. Engine, according to claim 11, of which the first portion of the spinning wheel is radially inward with respect to the second portion.

13. Engine according to claim 11, of which the first portion of the spinning wheel is radially outward with respect to the second portion.
